Europäisches Patentamt

European Patent Office

Office européen des brevets

(19)

(11) **EP 0 919 125 B1**

(12) **EUROPEAN PATENT SPECIFICATION**

(45) Date of publication and mention
of the grant of the patent:
**29.05.2002 Bulletin 2002/22**

(51) Int Cl.⁷: **A01N 37/34**, A61K 7/00
// (A01N37/34, 31:16)

(21) Application number: **97309661.3**

(22) Date of filing: **28.11.1997**

(54) **Synergistic antimicrobial composition**

Synergistische antimikrobielle Zusammensetzung

Composition antimicrobienne synergique

(84) Designated Contracting States:
**BE DE ES FR GB IE IT**

(43) Date of publication of application:
**02.06.1999 Bulletin 1999/22**

(73) Proprietor: **Calgon Corporation**
**Pittsburgh, Pennsylvania 15205 (US)**

(72) Inventors:
• **Gaffney, Tammy W.**
**Pittsburgh, PA 15228 (US)**
• **Melby, Allan L.**
**Cranberry Township, PA 16066 (US)**

(74) Representative: **Ricker, Mathias, Dr.Dipl.-Chem.**
**Bardehle-Pagenberg-Dost-Altenburg-**
**Geissler & Partner,**
**Patent- und Rechtsanwälte,**
**Postfach 86 06 20**
**81633 München (DE)**

(56) References cited:
EP-A- 0 761 094          US-A- 3 982 022
US-A- 4 118 332

• **KARL-HEINZ DIEHL: "Vergleichende**
**Untersuchung zur antimikrobiellen Wirksamkeit**
**von chemischen Konservierungsmitteln in**
**kosmetischen Formulierungen " SEIFEN, ÖLE,**
**FETTE, WACHSE, vol. 111, no. 8, May 1985,**
**AUGSBURG DE, pages 222-7, XP002064614**

**Description**

1. <u>**Field Of The Invention,**</u>

The present invention relates to synergistic antimicrobial compositions which are generally useful for inhibiting microbial growth wherever such microbial growth is found, for example, in aqueous systems related to a wide variety of industrial applications, and to methods for using such compositions.

2. <u>**Description Of The Background Art**</u>

As used herein, the phrases "antimicrobial", "biocide", and "inhibiting microbial growth" refer to the killing of, the inhibition of, or the control of the growth of bacteria, yeast, mould, and/or algae. A number of important industries have experienced serious adverse effects from the activity of such biological growth on the raw materials which they employ, in their process waters, on various components of their manufacturing processes, and in the finished products which they produce. Such industries are many and diverse and include the paint, wood, textile, cosmetic and personal care, leather, tobacco, fur, rope, paper, pulp, plastics, fuel, oil, rubber, and machine industries.

U.S. Patent Nos. 3,833,731, 3,877,922, 3,873,597, 3,644,380, 3,833,743, and 3,929,858 disclose 1,2-dibromo-2,4-dicyanobutane DBDCB and its use as an antibacterial, antifungal, and algicidal agent. Compounds related to DBDCB are also effective as antimicrobial agents. For example, U.S. Patent No. 4,442,122 describes the use of 1,2-dibromo-2-cycloalkane compounds to inhibit microbial growth, and U.S. Patent No. 4,496,581 discloses 1,2-dibromo-2-cyano-2-(heterocyclic) alkane compounds and their use as antimicrobial agents.

The use of DBDCB and related compounds in conjunction with other antimicrobial agents is also known in the art. U.S. Patent No. 4,604,405 describes a synergistic antimicrobial composition for industrial and agricultural use comprised of DBDCB and 2,2-dibromo-3-nitrilopropionamide. U.S. Patent No. 4,655,815 discloses a synergistic antimicrobial admixture comprising DBDCB and a formaldehyde donor. U.S. Patent No. 4,830,657 describes a synergistic antimicrobial combination comprising DBDCB and 1,2-benzisothiazolin-3-one. U.S. Patent No. 5,034,405 discloses the use of admixtures of DBDCB, 2-methyl-4-isothiazolin-3-one and 5-chloro-2-methyl-4-isothiazolin-3-one as antimicrobial agents. U.S. Patent No. 5,124,355 discloses an antimicrobial composition of DBDCB and 2-(decylthio) ethaneamine and a method of using the same. U.S. Patent No. 5,364,874 discloses a composition containing 2-halo-2-halomethylglutaronitrile and a 4,5-polymethylene-4-isothiazolin-3-one which has antibacterial and antifungal effects.

However, there remains a very real and substantial need for antimicrobial compositions having improved capability of effectively controlling and/or inhibiting microbial growth in industrial aqueous systems and on articles of manufacture. Because of increasing environmental regulations, there is still a further need to provide biocidal compositions having enhanced antimicrobial effect which are effective in lower doses than conventionally used. Use of lower amounts of biocides has a favourable impact on the environment, and allows users to realise significant cost savings.

<u>**SUMMARY OF THE INVENTION**</u>

The present invention generally meets the above described needs by providing synergistic antimicrobial compositions comprising 2,4,4'-trichloro-2'-hydroxydiphenyl ether (Triclosan) and 1,2-dibromo-2,4-dicyanobutane (DBDCB). The present invention also provides a method for inhibiting microbial growth in aqueous systems and on articles or products of manufacture prone to such growth comprising adding to said systems or applying to said articles an effective amount of Triclosan and DBDCB.

As used herein, the term "effective amount" refers to that amount of a composition comprising Triclosan and DBDCB necessary to achieve the desired level of inhibition or control of microbial growth in the aqueous system or on the article being treated.

<u>**DESCRIPTION OF THE INVENTION**</u>

Both Triclosan, and DBDCB, are known individually as antimicrobial agents. The unexpected finding of the present invention is that they are synergistic when used in combination. As used herein, the terms "synergy" and "synergistic" refer to instances where the effectiveness of a composition comprising two or more biocides, such as Triclosan and DBDCB, exceeds the sum of the efficacies of the individual components taken alone. Thus, using a synergistic biocidal composition in which Triclosan and DBDCB are incorporated in combination may allow for use of a lower overall concentration of biocide or the realisation of an enhanced antimicrobial effect at a comparable dosage.

The present invention is directed to a synergistic antimicrobial composition comprising: a) Triclosan; and b) DBDCB, wherein the weight ratio of a) to b), on an active basis, ranges from about 1000:1 to 1:1000. The present invention is further directed to a method for inhibiting microbial growth in an aqueous system or on an article or product of manufacture prone to such growth, which method comprises treating said system or said article with an effective amount of an antimicrobial composition of: a) Triclosan and b) DBDCB, wherein the weight ratio of a) to b), on an active basis, ranges from about 1000:1 to 1:1000.

The weight ratio of the two components of the synergistic combination is dictated by the dosage levels of each component which demonstrate synergism, based on 100% active ingredient, relative to each end use application. The weight ratio of component a), Triclosan to component b), DBDCB, may range from 1000:1 to 1:1000 on an active basis, preferably from 100:1 to 1:500, more preferably from about 4:1 to 1:64. As will be understood by one skilled in the art, however, the synergistic weight ratio of the two components generally varies to some extent depending on the application and the organism being controlled. For example, a higher ratio of Triclosan to DBDCB might be more effective in one application, while a higher ratio of DBDCB to Triclosan might be more effective in another application. The Triclosan/DBDCB composition has been found particularly effective against bacteria when used in a weight ratio of between about 4:1 and 1:16.

An effective amount of a synergistic composition of Triclosan and DBDCB should be added to an aqueous system being treated. At least 0.1 parts per million (ppm), based on the weight of water in the system being treated, of the synergistic composition according to the invention is added. Preferably, between about 1 ppm and about 10,000 ppm of Triclosan and between about 10 ppm and 2000 ppm of DBDCB, based on the weight of water in the system being treated, are added. More preferably, between about 50 ppm and 1000 ppm of Triclosan and between about 100 ppm and 500 ppm of DBDCB, based on the weight of water in the system being treated, are added. It is well within the ordinary skill of one practising in the art to determine the effective amount of biocide for a given system based on various system parameters including but not limited to the size of the system, pH of the system, the types of organisms present and the amount of control desired.

Likewise, an effective amount of a synergistic combination of Triclosan and DBDCB should be applied to an article or product of manufacture being treated. The method of treatment may be applied whilst the article or product is being manufactured. Generally, a solution of the synergistic antimicrobial composition according to the present invention having a concentration of at least 0.1 ppm is incorporated into, sprayed onto, used to dip, or otherwise applied to the substrate being treated in order to prevent growth of bacteria, mould, yeast and algae. Again, it is well within the ordinary skill of one practising in the art to determine the effective amount of biocide to apply to a given article of manufacture being treated.

The active ingredients of the synergistic antimicrobial compositions of the present invention may be used in diverse formulations: solid, including finely divided powders and granular materials; as well as liquid, such as solutions, emulsions, suspensions, concentrates, emulsifiable concentrates, slurries and the like, depending upon the application intended, and the formulation media desired. Further, when the synergistic antimicrobial combinations are liquid, they may be employed neat or may be incorporated into various formulations, both solid and liquid, as an adsorbate on suitable inert carriers such as talc, clays, diatomaceous earth and the like, or water and various organic liquids such as lower alkanols, kerosene, benzene, toluene, and other petroleum distillate fractions or mixtures thereof.

Triclosan is commercially available in powder form from Ciba Geigy, Greensboro, N.C., USA as Irgasan® DP 300. DBDCB is commercially available from Calgon Corporation, Pittsburgh, PA, USA in various forms, including solid, liquid and aqueous dispersions.

It will also be understood by one skilled in the art that the synergistic antimicrobial composition according to the present invention may be used in combination with other antimicrobial materials. For example, the composition can be combined with other fungicides and bactericides in appropriate concentrations and in appropriate instances so as to combine the action of each to obtain particularly useful results. Such combinations might find particular application in the preparation of germicidal soaps, in the production of cosmetics and aqueous coatings and in combating paper mill slime accumulations. The synergistic antimicrobial combination of the present invention can be combined with other algicidal agents as well.

In accordance with the present invention in another aspect there is further provided a method of inhibiting the growth of at least one of: bacteria, yeast, mould and algae. According to the methods of the present invention, this growth is inhibited in aqueous systems or on articles or products of manufacture prone to such growth. These methods comprise adding to the aqueous system or treating the article or product containing said bacteria, yeast, mould and/ or algae with an effective amount of a synergistic composition of Triclosan and DBDCB. This addition can be accomplished either by simple addition of Triclosan and DBDCB together as a single admixture, or by addition of the two components separately. Such separate administration can either be at the same time or at different times. The net effect will be the same; the system, article or product being treated will ultimately have incorporated therein or have applied thereto the desired dosage concentration of each component.

Further, the compositions of the present invention are believed to be effective irrespective of the method of application. For example, the antimicrobial compositions described herein can be added to a system being treated via a low level, continuous feed practice, a semi-continuous feed practice or through slug feeding. All of these feeding practices will be familiar to one having ordinary skill in the art. Slug feeding is particularly effective and therefore is a preferred manner of employing the methods of the present invention. In a recirculating water system, slug feeding allows the user to monitor the micro-organism concentration in the system, and feed product only when micro-organism concentrations increase; the user realises a cost savings by feeding an effective amount of Triclosan and DBDCB only when needed. Typically, when treating a cosmetic or personal care product, a slug feed should be added to the product at the end of the manufacturing process after the product has cooled to below about 50°C.

As noted above, the present invention is based upon the discovery that use of Triclosan in conjunction with DBDCB produces synergistic results and is effective in controlling the growth of bacteria, yeast, mould and algae in a variety of industrial and other applications. The utility of the synergistic antimicrobial compositions disclosed herein derives from its versatility both in the numerous industries in which it can be applied, as well as the numerous micro-organisms against which it is effective and the fact that the compositions allow effective treatment using lower than conventional dose levels therefore at lower cost and with less adverse environmental impact.

It is contemplated that the synergistic compositions according to the present invention as disclosed herein, and the methods for using the same, will be useful in virtually any aqueous system or on any article or product of manufacture in which inhibition of microbial growth is desired, absent compatibility problems. Important applications of the synergistic antimicrobial combinations of the present invention include, for example: inhibiting the growth of bacteria and fungi, including yeast and mould, in aqueous paints, adhesives, latex emulsions, inks and joint cements; preserving wood; preserving cutting oils and metal working fluids; controlling slime-producing bacteria and fungi, including yeast and mould, in pulp and paper mills and cooling towers; as a spray or dip treatment for textiles and leather to prevent mould growth; as a component of anti-fouling paints to prevent adherence of fouling organisms; protecting paint films, especially exterior paints, from attack by fungi which occurs during weathering of the paint film; protecting processing equipment from slime deposits during manufacture of cane and beet sugar, foods, foodstuffs and food additives; preventing micro-organism buildup and deposits in air washer or scrubber systems and in industrial fresh water supply systems; controlling micro-organism contamination in closed loop and recirculating water cooling systems; controlling micro-organism contamination and deposits in oil field drilling fluids and muds, and in secondary petroleum recovery processes; preventing bacterial and fungal growth in paper coating processes which might adversely affect the quality of the paper coating; controlling bacterial and fungal growth and deposits during the manufacture of various specialty boards, e.g., cardboard and particle board; preventing sap stain discolouration on freshly cut wood of various kinds; controlling bacterial and fungal growth in clay and pigment slurries of various types which are manufactured for later use in paper coating and paint manufacturing and which are susceptible to degradation by micro-organisms during storage and transport; as a hard surface disinfectant to prevent growth of bacteria and fungi on walls, floors, etc.; and in swimming pools to prevent algal growth.

The synergistic antimicrobial composition according to the present invention is particularly applicable to the control of bacterial and fungal growth in cosmetic and personal care products. Such products include but are not limited to creams, lotions, shampoos, conditioners, sunscreens, hand cleaners, liquid hand soaps, detergents, hospital scrubs, bactericidal washes, deodorants, and the like. Cosmetic and personal care products subject to microbiological attack can suffer from separation of emulsions, discoloration, unsightly visible colonies, malodor, and change of pH; microbial growth in these products can also lead to potential health hazards.

The superior antimicrobial activity of the synergistic antimicrobial composition of Triclosan and DBDCB has been confirmed using standard laboratory techniques. The antimicrobial composition has been found effective, for example, in inhibiting microbial growth including but not limited to the bacteria *Klebsiella pneumoniae*, *Escherichia coli* and *Pseudomonas aeruginosa,* and the yeast *Candida albicans*. The combination is also believed to be effective against other bacteria, such as *Bacillus sp., Staphlococcus* sp., *Flavobacterium* sp., *Enterobacter* sp., and *Xanthomonas* sp., anaerobic bacteria, other fresh water organisms such as filamentous bacteria, fungi including but not limited to various species of *Candida* and *Saccharomyces* and white and pink yeasts, and various species of algae.

## EXAMPLES

The following Examples are set forth to illustrate embodiments of the present invention by way of example only.

## EXAMPLE 1

The biocidal efficacy in microtiter tests of the antimicrobial composition of the present invention is demonstrated below using *Pseudomonas aeruginosa* (ATCC 15442).

An 8X stock solution of DBDCB was prepared by dissolving about 3.2 grams (g) of 20% active DBDCB in about 4 ml of methanol and diluting the volume up to about 100 ml with deionized water. The DBDCB used in the examples was obtained from Calgon Corporation, Pittsburgh, PA, as Merguard® 1200. A Triclosan 4X stock solution was prepared by dissolving about 0.16g of about 99% active Triclosan in about 5 ml of methanol and diluting the volume up to about 100 ml with deionized water. The Triclosan was obtained from Ciba Geigy as Irgasan® DP 300.

Two microtiter plates were prepared for use in the example, each microtiter plate having 8 rows, A-H, and 12 columns, 1-12. The amount of each biocide in each well of the plates is depicted below.

TABLE 1

| AMOUNT OF EACH BIOCIDE IN WELLS OF FIRST MICROTITER PLATE | | | | | | | | | | | | | |
|---|---|---|---|---|---|---|---|---|---|---|---|---|---|
| ROW LETTER | BIOCIDE | CONCENTRATIONS (ppm Active) | | | | | | | | | | | |
| | | 1 | 2 | 3 | 4 | 5 | 6 | 7 | 8 | 9 | 10 | 11 | 12 |
| A | DBDCB | 800 | 800 | 800 | 800 | 800 | 800 | 800 | 800 | 800 | 800 | - | 800 |
| | Triclosan | 400 | 400 | 200 | 200 | 100 | 100 | 50 | 50 | 25 | 25 | - | 0 |
| B | DBDCB | 400 | 400 | 400 | 400 | 400 | 400 | 400 | 400 | 400 | 400 | - | 400 |
| | Triclosan | 400 | 400 | 200 | 200 | 100 | 100 | 50 | 50 | 25 | 25 | - | 0 |
| C | DBDCB | 200 | 200 | 200 | 200 | 200 | 200 | 200 | 200 | 200 | 200 | - | 200 |
| | Triclosan | 400 | 400 | 200 | 200 | 100 | 100 | 50 | 50 | 25 | 25 | - | 0 |
| D | DBDCB | 100 | 100 | 100 | 100 | 100 | 100 | 100 | 100 | 100 | 100 | - | 100 |
| | Triclosan | 400 | 400 | 200 | 200 | 100 | 100 | 50 | 50 | 25 | 25 | - - | 0 |
| E | DBDCB | 50 | 50 | 50 | 50 | 50 | 50 | 50 | 50 | 50 | 50 | - | 50 |
| | Triclosan | 400 | 400 | 200 | 200 | 100 | 100 | 50 | 50 | 25 | 25 | - | 0 |
| F | DBDCB | 25 | 25 | 25 | 25 | 25 | 25 | 25 | 25 | 25 | 25 | - | 25 |
| | Triclosan | 400 | 400 | 200 | 200 | 100 | 100 | 50 | 50 | 25 | 25 | - | 0 |
| G | DBDCB | 12.5 | 12.5 | 12.5 | 12.5 | 12.5 | 12.5 | 12.5 | 12.5 | 12.5 | 12.5 | - | 12.5 |
| | Triclosan | 400 | 400 | 200 | 200 | 100 | 100 | 50 | 50 | 25 | 25 | - | 0 |
| H | DBDCB | 0 | 0 | 0 | 0 | 0 | 0 | 0 | 0 | 0 | 0 | - | 0 |
| | Triclosan | 400 | 400 | 200 | 200 | 100 | 100 | 50 | 50 | 25 | 25 | - | 0 |

The amount of biocide in each well of the second microtiter plate of each set was a follows:

TABLE 2

| AMOUNT OF EACH BIOCIDE IN WELLS OF SECOND MICROTITER PLATE | | | | | | | | | | | | | |
|---|---|---|---|---|---|---|---|---|---|---|---|---|---|
| ROW LETTER | BIOCIDE | CONCENTRATIONS (ppm Active) | | | | | | | | | | | |
| | | 1 | 2 | 3 | 4 | 5 | 6 | 7 | 8 | 9 | 10 | 11 | 12 |
| A | DBDCB | 800 | 800 | 800 | 800 | 800 | 800 | 800 | 800 | 800 | 800 | - | 800 |
| | Triclosan | 12.5 | 12.5 | 6.25 | 6.25 | 3.125 | 3.125 | 1.56 | 1.56 | 0.78 | 0.78 | - | 0 |
| B | DBDCB | 400 | 400 | 400 | 400 | 400 | 400 | 400 | 400 | 400 | 400 | - | 400 |
| | Triclosan | 12.5 | 12.5 | 6,25 | 625 | 3.125 | 3.125 | 1.56 | 1.56 | 0.78 | 0.78 | - | 0 |
| C | DBDCB | 200 | 200 | 200 | 200 | 200 | 200 | 200 | 200 | 200 | 200 | - | 200 |
| | Triclosan | 12.5 | 12.5 | 6.25 | 625 | 3.125 | 3.125 | 1.56 | 1.56 | 0.78 | 0 78 | - | 0 |
| D | DBDCB | 100 | 100 | 100 | 100 | 100 | 100 | 100 | 100 | 100 | 100 | - | 100 |
| | Triclosan | 12.5 | 12.5 | 6.25 | 6.25 | 3.125 | 3.125 | 1.56 | 156 | 0.78 | 0.78 | - | 0 |
| E | DBDCB | 50 | 50 | 50 | 50 | 50 | 50 | 50 | 50 | 50 | 50 | - | 50 |
| | Triclosan | 12.5 | 12.5 | 6.25 | 6.25 | 3.125 | 3.125 | 1.56 | 1.56 | 0.78 | 0.78 | - | 0 |
| F | DBDCB | 25 | 25 | 25 | 25 | 25 | 25 | 25 | 25 | 25 | 25 | - | 25 |
| | Triclosan | 12.5 | 12.5 | 6.25 | 6.25 | 3.125 | 3.125 | 1.56 | 1.56 | 0.78 | 0.78 | - | 0 |
| G | DBDCB | 12.5 | 12.5 | 12.5 | 12.5 | 12.5 | 12.5 | 12.5 | 12.5 | 12.5 | 12 5 | - | 12.5 |
| | Triclosan | 12.5 | 12.5 | 6.25 | 6.25 | 3.125 | 3.125 | 1.56 | 1.56 | 0.78 | 0.78 | - | 0 |
| H | DBDCB | 0 | 0 | 0 | 0 | 0 | 0 | 0 | 0 | 0 | 0 | - | 0 |
| | Triclosan | 12.5 | 12.5 | 6.25 | 6.25 | 3.125 | 3.125 | 1.56 | 1.56 | 0.78 | 0 78 | - | 0 |

As is illustrated in the tables above, the amounts of DBDCB and Triclosan were varied in a serial dilution ranging from 800 ppm active to 12.5 ppm active for DBDCB and 400 ppm active to 0.78 for Triclosan.

The minimum inhibitory concentration (MIC) for each biocide combination against *Ps. aeruginosa* was determined. The MIC is the least amount of biocide needed to prevent growth in the well, with growth being defined as turbidity in the medium or a "pellet" of cells which came out of the medium and settled at the bottom of the well.

Additional plates were then subcultured from the MIC plates at 24 hours following biocide addition. Subculturing was done to determine the minimum biocidal concentration (MBC). The MBC is the lowest concentration of biocide that results in no growth after subculturing and subsequent incubation.

All of the microtiter plates including the MIC plates and the MBC plates were incubated for 24 hours at 37°C. Following the 24 hour incubation period, the presence or absence of growth in each well of the plates was determined. Growth in the microtiter plates was determined with a Dynatech MR-5000 microplate reader, available from Dynatech Laboratories, Chantilly, VA, USA, the use of which will be familiar to one having ordinary skill in the art. The presence or absence of growth in each well, along with the concentration of biocide in each well, was then used to determine the synergistic properties of the biocide combinations. The synergistic properties were evaluated by determining the Kull value, or K value. The method for calculating K value is well known to those skilled in the art. In this example, the K value was determined by the following formula:

$$K= \frac{\text{[DBDCB] In Combination}}{\text{[DBDCB] Alone}} + \frac{\text{[Triclosan] In Combination}}{\text{[Triclosan] Alone}}$$

where "[DBDCB] In Combination" means the concentration of DBDCB which, when used in combination with Triclosan, resulted in inhibition of microbial growth;

"[Triclosan] In Combination" means the concentration of Triclosan which, when used in combination with DBDCB, resulted in inhibition of microbial growth; "[DBDCB] Alone" means the concentration of DBDCB which, when used alone, resulted in inhibition of microbial growth; and

"[Triclosan] Alone" means the concentration of the Triclosan which, when used alone, resulted in inhibition of microbial growth.

A K value of less than 1 indicates synergy between the two biocides, a K value of greater than 1 indicates antagonism between the two biocides, and a K value equal to 1 indicates an additive effect of the two biocides.

The K values determined for *Pseudomonas aeruginosa* are recorded in Table 3.

TABLE 3

| "K" VALUES OBTAINED FOR *PSEUDOMONAS AERUGINOSA* | | | | | |
|---|---|---|---|---|---|
| [DBDCB] Alone, ppm | [Triclosan] Alone, ppm | [DBDCB] In Combination, ppm | [Triclosan] In Combination, ppm | K Value | Weight Ratio Triclosan:DBDCB |
| 200 | 100 | 12.5 | 50 | 0.56 | 4:1 |
| 200 | 100 | 50 | 25 | 0.5 | 1:2 |
| 200 | 100 | 50 | 3.125 | 0.28 | 1:16 |
| 200 | 100 | 100 | 3.125 | 0.53 | 1:32 |
| 200 | 100 | 100 | 1.56 | 0.516 | 1:64 |

As can be seen from the results of Table 3, synergy was demonstrated against *Pseudomonas aeruginosa.*

**EXAMPLE II**

Example I was repeated with the following differences. The DBDCB was tested at the following concentrations: 200, 100, 50, 25, 12.5, 6.25 and 3.125, with concentration given in ppm active. The Triclosan stock solution was prepared by dissolving 0.08 g of Irgasan® DP 300, obtained from Ciba Geigy, in about 5 ml of methanol and diluting to 100 ml with deionized water. The Triclosan was tested at the following concentrations: 100, 50, 25, 12.5, 6.25, 3.125, 1.56, 0.78, 0.39 and 0.195, with concentration given in ppm active. The biocidal composition was tested against both the bacterium *Pseudomonas aeruginosa* (ATCC 15442) and the yeast *Candida albicans* (ATCC 10231). The bacterial plates were incubated at 35°C for 24 hours and the yeast plates at 30°C for 5 days. Results are presented in Tables 4 and 5 below.

Table 4

| "K" VALUES OBTAINED FOR *PSEUDOMONAS AERUGINOSA* | | | | | |
|---|---|---|---|---|---|
| [DBDCB] Alone, ppm | [Triclosan] Alone, ppm | (DBDCB) In Combination, ppm | [Triclosan] In Combination, ppm | K Value | Weight Ratio Tricfosan:DBDCB |
| 100 | >100 | 25 | 50 | <0.75 | 2:1 |
| 100 | >100 | 50 | 25 | <0.75 | 1:2 |
| 200 | >100 | 100 | 50 | <1.0 | 1:2 |

Table 5

| "K" VALUES OBTAINED FOR CANDIDA ALBICANS | | | | | |
|---|---|---|---|---|---|
| (DBDCB] Alone, ppm | [Triclosan] Alone, ppm | [DBDCB] In Combination, ppm | [Triclosan] In Combination, ppm | K Value | Weight Ratio Triclosan:DBDCB |
| 100 | 12.5 | 3.125 | 6.25 | 0.53 | 2:1 |
| 100 | 12.5 | 6.25 | 6.25 | 0.56 | 1:1 |
| 100 | 12.5 | 12.5 | 6.25 | 0.625 | 1:2 |
| 100 | 12.5 | 25 | 6.25 | 0.75 | 1:4 |
| 100 | 12.5 | 50 | 3.125 | 0.75 | 1:16 |

## Claims

1. A synergistic antimicrobial composition comprising:

   a) 2,4,4'-trichloro-2'-hydroxydiphenyl ether; and
   b) 1,2-dibromo-2,4-dicyanobutane;

   wherein the weight ratio of a) to b) is, on an active basis, 1000:1 to 1:1000.

2. A composition as claimed in Claim 1 and wherein the weight ratio of a) to b) is from 100:1 to 1:500.

3. A composition as claimed in claim 2 and wherein the weight ratio of a) to b) is from 4:1 to 1:64.

4. A method for inhibiting microbial growth in an aqueous system or on an article or product of manufacture which comprises adding to said system or said article or product an effective amount of a synergistic antimicrobial composition as claimed in claim 1, claim 2 or claim 3.

5. A method as claimed in claim 4 and wherein the 2,4,4'-trichloro-2'-hydroxydiphenyl ether and 1,2-dibromo-2,4-dicyanobutane are added together as a single composition to the system or article or product being treated.

6. A method as claimed in claim 4 and wherein the 2,4,4'-trichloro-2'-hydroxydiphenyl ether and 1,2-dibromo-2,4-dicyanobutane are added separately to the system or article or product being treated.

7. A method as claimed in claim 4, 5 or 6 and
   wherein at least 0.1 ppm of the synergistic antimicrobial composition is added to the system or article or product being treated.

8. A method as claimed in claim 4, claim 5, claim 6 or claim 7 and wherein between about 50 ppm and 1000 ppm 2,4,4'-trichloro-2'-hydroxydiphenyl ether and between about 100 ppm and 500 ppm 1,2-dibromo-2,4-dicyanobutane are added to the system or article or product being treated.

9. A composition as claimed in claim 1 and which includes one or more other antimicrobial agents.

10. A method as claimed in any one of claims 5 to 8 and wherein the composition is applied to a cosmetic or personal care product.

**Patentansprüche**

1. Eine synergistische antimikrobielle Zusammensetzung, umfassend:

   a) 2,4,4'-Trichlor-2'-hydroxydiphenylether; und

   b) 1,2-Dibrom-2,4-dicyanobutan;

   wobei das Gewichtsverhältnis von a) zu b), auf aktiver Basis, 1000:1 bis 1:1000 beträgt.

2. Zusammensetzung nach Anspruch 1, **dadurch gekennzeichnet, dass** das Gewichtsverhältnis von a) zu b) 100:1 bis 1:500 beträgt.

3. Zusammensetzung nach Anspruch 2, **dadurch gekennzeichnet, dass** das Gewichtsverhältnis von a) zu b) 4:1 bis 1:64 beträgt.

4. Verfahren zur Inhibierung von mikrobiellem Wachstum in einem wässrigen System oder auf einem Herstellungs-Artikel oder -Produkt, welches die Zugabe einer wirksamen Menge einer synergistischen antimikrobiellen Zusammensetzung nach Anspruch 1, 2 oder 3 zu diesem System oder Artikel oder Produkt umfasst.

5. Verfahren nach Anspruch 4, **dadurch gekennzeichnet, dass** 2,4,4'-Trichlor-2'-hydroxydiphenylether und 1,2-Dibrom-2,4-dicyanobutan zusammen als eine einzige Zusammensetzung zu dem System oder Artikel oder Produkt, welches behandelt wird, hinzugegeben werden.

6. Verfahren nach Anspruch 4, **dadurch gekennzeichnet, dass** 2,4,4'-Trichlor-2'-hydroxydiphenylether und 1,2-Dibrom-2,4-dicyanobutan getrennt zu dem System oder Artikel oder Produkt, welches behandelt wird, hinzugegeben werden.

7. Verfahren nach Anspruch 4, 5 oder 6, **dadurch gekennzeichnet, dass** mindestens 0,1 ppm der synergistischen antimikrobiellen Zusammensetzung zu dem System oder Artikel oder Produkt, welches behandelt wird, hinzugegeben wird.

8. Verfahren nach Anspruch 4, 5, 6 oder 7, **dadurch gekennzeichnet, dass** zwischen ca. 50 ppm und 1000 ppm 2,4,4'-Trichloro-2'-hydroxdiphenylether und zwischen ca. 100 ppm und 500 ppm 1,2-Dibrom-2,4-dicyanobutan zu dem System oder Artikel oder Produkt, welches behandelt wird, hinzugegeben werden.

9. Zusammensetzung nach Anspruch 1, **dadurch gekennzeichnet, dass** sie einen oder mehrere andere antimikrobielle Wirkstoffe enthält.

10. Verfahren nach mindestens einem der Ansprüche 5 bis 8, **dadurch gekennzeichnet, dass** die Zusammensetzung zu einem Kosmetik- oder Pflegeprodukt hinzugegeben wird.

**Revendications**

1. Une composition antimicrobienne synergique comprenant :

   a) de l'éther 2, 4, 4'-trichloro-2'-hydroxydiphénylique, et
   b) du 1, 2-dibromo-2, 4-dicyanobutane ;

   dans laquelle le rapport pondéral de a) à b) est sur une base active de 1 000 : 1 à 1 : 1 000.

**2.** Une composition selon la revendication 1, dans laquelle le rapport pondéral de a) à b) est de 100 : 1 à 1 : 500.

**3.** Une composition selon la revendication 2, dans laquelle le rapport pondéral de a) à b) est de 4 : 1 à 1 : 64.

**4.** Un procédé pour inhiber la croissance microbienne dans un système aqueux ou sur un article ou produit manufacturé qui consiste à ajouter audit système ou audit article ou produit une quantité efficace d'une composition antimicrobienne synergique selon la revendication 1, la revendication 2 ou la revendication 3.

**5.** Un procédé selon la revendication 4, dans lequel l'éther 2, 4, 4'-trichloro-2'-hydroxydiphénylique et le 1, 2-dibromo-2, 4-dicyanobutane sont ajoutés conjointement sous la forme d'une composition unique au système ou à l'article ou au produit traité.

**6.** Un procédé selon la revendication 4, dans lequel l'éther 2, 4, 4'-trichloro-2'-hydroxydiphénylique et le 1, 2-dibromo-2, 4-dicyanobutane sont ajoutés séparément au système ou à l'article ou au produit à traiter.

**7.** Un procédé selon la revendication 4, 5 ou 6, dans lequel au moins on ajoute 0,1 ppm de la composition antimicrobienne synergique au système ou à l'article ou au produit à traiter.

**8.** Un procédé selon la revendication 4, la revendication 5, la revendication 6 ou la revendication 7, dans lequel on ajoute au système ou à l'article ou au produit à traiter entre environ 50 ppm et 1 000 ppm d'éther 2, 4, 4'-trichloro-2'-hydroxydiphénylique et entre environ 100 ppm et 500 ppm de 1, 2-dibromo-2, 4-dicyanobutane.

**9.** Une composition selon la revendication 1, dans laquelle il est prévu un ou plusieurs autres agents antimicrobiens.

**10.** Un procédé selon l'une, quelconque des revendications 5 à 8, dans lequel la composition est appliquée à un produit cosmétique ou à un produit de soins de personnes.